# EUROPEAN PATENT SPECIFICATION

(11) **EP 4 682 500 B1**
(45) Date of publication and mention of the grant of the patent: **18.11.2026**
(21) Application number: 24202550.0
(22) Date of filing: 25.09.2024
(51) Int. Cl.: G01M 5/00

(54) **METHOD AND DEVICE FOR PASSIVE DIAGNOSIS OF ROPE LASHINGS OF BUILDING STRUCTURES**
VERFAHREN UND VORRICHTUNG ZUR PASSIVEN DIAGNOSE VON ZURRSEILEN VON BAUWERKEN
PROCÉDÉ ET DISPOSITIF DE DIAGNOSTIC PASSIF D'ARRIMAGES PAR CÂBLE DE STRUCTURES DE CONSTRUCTION

(30) Priority: 15.07.2024 PL 44923224
(43) Date of publication of application: 21.01.2026
(73) Proprietor: Akademia Gorniczo-Hutnicza im. Stanislawa Staszica w Krakowie, 30-059 Krakow (PL)
(72) Inventor: Kwasniewski, Jerzy, 30-211 Kraków (PL); Molski, Szymon, 31-901 Kraków (PL); Mazurek, Pawel, 30-071 Kraków (PL)
(74) Representative: Kuczynska, Teresa

(56) References cited:
- CA-A1- 3 112 422
- DE-A1- 102017 101 443
- PL-B1- 243 637
- HAE-BUM YUN ET AL: "Development of Inspection Robots for Bridge Cables", THE SCIENTIFIC WORLD JOURNAL, vol. 2013, 28 December 2013 (2013-12-28), pages 1 - 17, XP055464405, DOI: 10.1155/2013/967508

## Description

The object of the invention is a method and device for passive diagnostics of rope lashings of building structures.

The field of technology to which the invention relates is technical diagnostics, construction and operation of structures.

Methods and devices for passive diagnosis of rope lashings of building structures are known.

From patent PL 243637, there is known a head for passive testing of wire ropes consisting of a sliding or rolling guide system mounted to a support frame through an adjustment system that adjusts the guide system to the rope diameter under test. Attached to this support frame by means of a handle is a bipartite interchangeable casing sleeve with a flange on which is mounted a bipartite positioning system with magnetometric sensors placed around the rope under test. The positioning system consists of two openable half-rings connected by a hinge and mounted on the flange of the casing sleeve. Attached to each half-ring are circumferentially flexible slats in the form bent to the axis of the casing sleeve, at the ends of which are magnetometer sensors. The positioning system has resilient and flexible slats which, when the half-rings are closed onto the flange of the casing sleeve, position the magnetometric sensors independently of the diameter of the casing sleeve matched to the diameter of the cable in the range from d1=20mm to d2=60mm. At the end of each slat, a buffer is placed behind the magnetometer sensor, determining the distance of the magnetometer sensor from the outer surface of the casing sleeve and, at the same time, from the rope to be tested, by elastic adjustment of the slats to any outer diameter of the casing sleeve.

In addition, a head for testing and inspecting steel cables consisting of a magnetic circuit, measuring sensors and guide rollers is known from patent PL 159050. The components of the magnetic circuit are embedded in the guides of a bipartite lightweight framework and restraints are fixed therein. The roller assembly is located inside the head and a clamping mechanism with a pressure regulator is fitted close to it. The head is also equipped with a component for encoding and transmitting electrical signals wirelessly.

The use of drones for diagnostics of overhead structures is also well known.

The technical problem, the solution to which is the aim of the invention, is to improve the safety and reduce the time-consuming execution of diagnostic tests on rope lashings of building structures such as RTV towers and masts, rope bridges, etc.

A device for passive diagnostics of rope lashings of building structures comprising a diagnostic module, which includes an arrangement of passive sensors positioned around the rope lashing under test on elastic sliding elements elastically fixed to the ring with the possibility of its opening thanks to a hinge, and comprising a travelling module with an arrangement of two rollers, according to the invention is characterised by the fact that the ring of the diagnostic module is rigidly connected by means of a connector to the arrangement of rollers of the travelling module driven via a tension member by a drone constituting the drive of the travelling module and moving along the rope lashing, the upper roller of which has an in-built encoder for measuring the travelled distance and the travel speed of movement of the travelling module.

Advantageously, the tension member is pivotally connected at the pivot connection points to the drone and the arrangement of rollers respectively, with the possibility of its movement within an angle α between the first position A for upward travel and the second position B for downward travel, guaranteeing correct operation regardless of the inclination β of the rope lashing.

Advantageously, at the point of connection of the rotary tension member with the arrangement of rollers, there is a ratchet mechanism limiting the movement of the tension member in its extreme positions, for upward and downward travel, to an angle α=2(90-β) degrees, where β is the angle of inclination of the rope lashing.

Advantageously, the travelling module is equipped with a power supply and recording system to which the indications from the passive sensors of the diagnostic module distributed around the rope lashing under test on the sliding elements and from the encoder in the upper roller are transmitted.

Advantageously, in the power supply and recording system the filtration and analysis of signals is performed with dedicated software making the test result independent of the diameter of the rope lashing under test and its possible disturbances, as well as the speed of the drone.

Method of passive diagnostics of rope lashings of building structures by means of a diagnostic module comprising an arrangement of passive sensors positioned around the rope lashing under test on elastic sliding elements elastically fixed to a ring, this ring opening thanks to a hinge, and comprising a travelling module with an arrangement of two rollers, according to the invention is characterised in that the arrangement of rollers of the travelling module, which is rigidly connected to the ring of the diagnostic module by means of a connector, is driven by a drone via a tension member, whereby the drone moving along the rope lashing is used as the drive of the travelling module and, moreover, an encoder integrated in the upper roller is used to measure the travelled distance and the travel speed of the travelling module.

Advantageously, the possibility of movement of the tension member pivotally connected at the pivot connection points to the drone and the arrangement of rollers, respectively, is limited to an angle α between the first position A for upward travel and the second position B for downward travel, whereby correct operation is guaranteed regardless of the inclination β of the rope lashing.

Advantageously, by means of a ratchet mechanism located at the point of connection of the rotary tension member with the arrangement of rollers, the movement of the tension member in its extreme positions, for upward and downward travel, is limited to an angle α=2(90-β) degrees, where β is the angle of inclination of the rope lashing.

Advantageously, indications from the passive sensors of the diagnostic module arranged around the rope lashing under test on the sliding elements and from the encoder in the upper roller are transmitted to the power supply and recording system of the travelling module.

Advantageously, in the power supply and recording system, filtering and signal analysis are performed with dedicated software, while making the test result independent of the diameter of the rope lashing under test and its possible disturbances, as well as of the speed of the drone.

The solution according to the invention resulted in a new lightweight diagnostic kit to be mounted on the rope lashing, allowing its technical condition to be tested along its entire length. The device eliminates the need to organise additional rigging to move the diagnostic device along the length of the rope lashing to be tested. This reduces the necessary activation time of the transmitting equipment on the mast, and increases the safety of performing diagnostic tests by eliminating the need for climbers to create and operate an additional drive rigging for the diagnostic device during tests (working in special conditions at height).

The object of the invention is illustrated in an example of embodiment in the attached drawing, in which fig. 1 depicts a device for passive diagnostics of rope lashings of building structures in a schematic view showing the two extreme positions of the drone-connected tension member, fig. 2 shows the diagnostic module with sensors, and fig.3 shows the components of the upper roller.

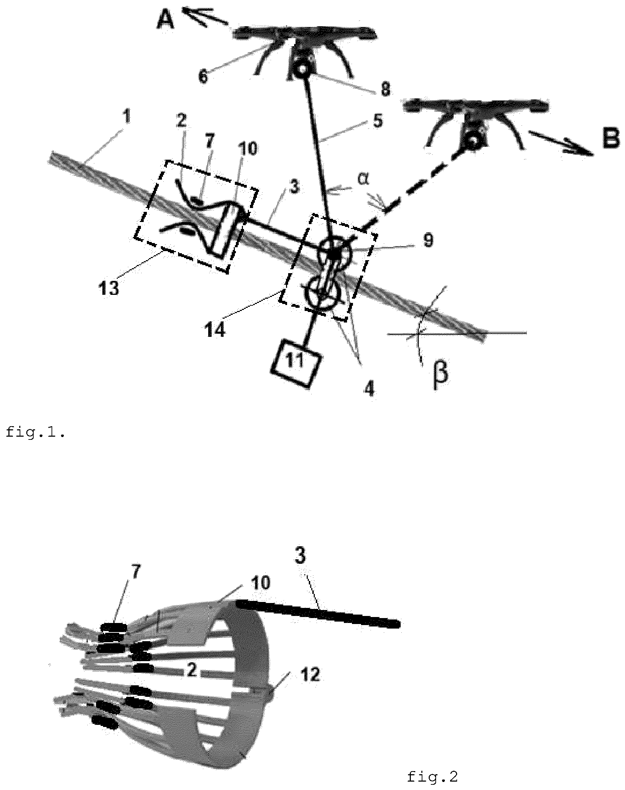

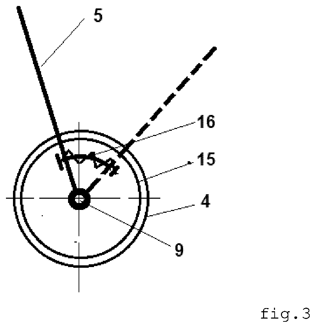

As shown in figure 1, the device for passive diagnosis of rope lashings 1 of building structures comprises a diagnostic module 13, which will be described in more detail below with reference to figure 2, and which has a ring 10. The ring 10 of the diagnostic module 13 is rigidly connected by a connector 3 to an arrangement of rollers 4 of the travelling module 14 driven via a tension member 5 by a drone 6 moving along the rope lashing 1. The upper roller 4 of the arrangement of rollers 4 has a built-in encoder 15 for measuring the distance travelled and the travel speed of movement of the travelling module, as shown in fig. 3. The tension member 5 is pivotally connected at point 8 with the drone 6 and at point 9 with the arrangement of rollers 4, with the possibility of its movement within an angle α between the first position A for upward travel and the second position B for downward travel, guaranteeing correct operation irrespective of the inclination β of the rope lashing 1. At the point 9 of the pivot connection of the tension member 5 with the arrangement of rollers 4, there is a ratchet mechanism 16, shown in more detail in fig. 3, this ratchet mechanism 16 limiting the movement of tension member 5 in its extreme positions, for upward and downward travel, to an angle α=2(90-β) degrees, where β is the angle of inclination of the rope lashing 1. The travelling module 14 is equipped with a power supply and recording system 11 to which the indications or readings from the passive sensors 7 of the diagnostic module 13 distributed around the tested rope lashing 1 on the sliding elements 2 and from the encoder 15 of the upper roller 4 are transmitted. The power supply and recording system 11 performs signal filtering and analysis with dedicated software, making the test result independent of the diameter of the rope lashing 1 under test and its possible disturbances, as well as of the drone's speed 6.

As shown in figure 2, the diagnostic module 13 of the device for passive diagnostics of rope lashings 1 of building constructions comprises an arrangement of passive sensors 7 situated around the rope lashing 1 to be tested on elastic sliding elements 2 elastically fixed to a ring 10 with the possibility of opening it by means of a hinge 12. The sliding elements 2 adjust to the different diameters of the rope lashing 1 and any irregularities caused, for example, by grease, by their free elastic deflection.

Figure 3 shows the components of the upper roller 4. In particular, the encoder 15 for measuring the distance travelled and the travel speed of movement of the travelling module 14 and the ratchet mechanism 16 limiting the movement of the tension member 5 in its extreme positions, when travelling up and down, are shown here.

## Claims

1. Device for passive diagnostics of rope lashings (1) of building structures comprising a diagnostic module (13), which includes an arrangement of passive sensors (7) positioned around the rope lashing (1) under test on elastic sliding elements (2) elastically fixed to a ring (10) with the possibility of its opening thanks to a hinge (12), and comprising a travelling module (14) with an arrangement of two rollers (4), the ring (10) of the diagnostic module (13) is rigidly connected by means of a connector (3) to the arrangement of rollers (4) of the travelling module (14),
**characterized in that** the travelling module is driven via a tension member (5) by a drone (6) constituting the drive of the travelling module (14) and moving along the rope lashing (1), the upper roller (4) of which has an in-built encoder (15) for measuring the travelled distance and the travel speed of movement of the travelling module (14).

2. Device according to claim 1, **characterised in that** the tension member (5) is pivotally connected at points (8, 9) to the drone (6) and the arrangement of rollers (4) respectively, with the possibility of its movement within an angle α between the first position A for upward travel and the second position B for downward travel, guaranteeing correct operation regardless of the inclination β of the rope lashing (1).

3. Device according to claim. 1, **characterised in that** at the point (9) of the connection of the rotary tension member (5) with the arrangement of rollers (4), there is a ratchet mechanism (16) limiting the movement of the tension member (5) in its extreme positions, for upward and downward travel, to an angle α=2(90-β) degrees, where β is the angle of inclination of the rope lashing (1).

4. Device according to claim. 1, **characterised in that** the travelling module (14) is equipped with a power supply and recording system (11) to which the indications from the passive sensors (7) of the diagnostic module (13) distributed around the rope lashing (1) under test on the sliding elements (2) and from the encoder (15) in the upper roller (4) are transmitted.

5. Device according to claim. 1, **characterised in that** in the power supply and recording system (11) the filtration and analysis of signals is performed with dedicated software making the test result independent of the diameter of the rope lashing (1) under test and its possible disturbances and of the speed of the drone (6).

6. Method for passive diagnostics of rope lashings (1) of building structures by means of a diagnostic module (13) comprising an arrangement of passive sensors (7) positioned around the rope lashing (1) under test on elastic sliding elements (2) elastically fixed to a ring (10), this ring (10) opening thanks to a hinge (12), and comprising a travelling module (14) with an arrangement of two rollers (4), **characterised in that** the arrangement of rollers (4) of the travelling module (14), which is rigidly connected to the ring (10) of the diagnostic module by means of a connector (3), is driven by a drone (6) via a tension member (5), whereby the drone (6) moving along the rope lashing (1) is used as the drive of the travelling module (14) and, moreover, an encoder (15) integrated in the upper roller (4) is used to measure the travelled distance and the travel speed of the travelling module (14).

7. Method according to claim. 6, **characterised in that** the possibility of movement of the tension member (5) pivotally connected at points (8, 9) to the drone (6) and the arrangement of rollers (4) respectively is limited to an angle α between the first position A for upward travel and the second position B for downward travel, whereby correct operation is guaranteed regardless of the inclination β of the rope lashing (1).

8. Method according to claim. 6, **characterised in that**, by means of a ratchet mechanism (16) located at the point (9) of the connection of the rotary tension member (5) with the arrangement of rollers (4), the movement of the tension member (5) in its extreme positions, for upward and downward travel, is limited to an angle α=2(90-β) degrees, where β is the angle of inclination of the rope lashing (1).

9. Method according to claim. 6, **characterised in that** the indications from the passive sensors (7) of the diagnostic module (13) arranged around the rope lashing (1) under test on the sliding elements (2) and from the encoder (15) in the upper roller (4) are transmitted to the power supply and recording system (11) of the travelling module (14).

10. Method according to claim. 6, **characterised in that** in the power supply and recording system (11), filtering and signal analysis are performed with dedicated software, while making the test result independent of the diameter of the rope lashing (1) under test and its possible disturbances, as well as of the speed of the drone (6).

## Patentansprüche

1. Vorrichtung zur passiven Diagnose von Seilabspannungen (1) von Bauwerken, umfassend ein Diagnosemodul (13), das eine Anordnung passiver Sensoren (7) aufweist, welche um die zu prüfende Seilabspannung (1) herum auf elastischen Gleitelementen (2) angeordnet sind, die elastisch an einem Ring (10) befestigt sind, der mittels eines Scharniers (12) geöffnet werden kann, sowie ein Fahrmodul (14) mit einer Anordnung von zwei Laufrollen (4), wobei der Ring (10) des Diagnosemoduls (13) mittels eines Verbindungselements (3) starr mit der Laufrollenanordnung (4) des Fahrmoduls (14) verbunden ist, **dadurch gekennzeichnet, dass** das Fahrmodul über ein Zugelement (5) von einer Drohne (6) angetrieben wird, die den Antrieb des Fahrmoduls (14) bildet und sich entlang der Seilabspannung (1) bewegt, wobei die obere Laufrolle (4) mit einem integrierten Encoder (15) zur Messung der zurückgelegten Strecke und der Fahrgeschwindigkeit des Fahrmoduls (14) ausgestattet ist.

2. Vorrichtung nach Anspruch 1, **dadurch gekennzeichnet, dass** das Zugelement (5) an den Punkten (8, 9) schwenkbar mit der Drohne (6) beziehungsweise mit der Laufrollenanordnung (4) verbunden ist und zwischen einer ersten Stellung A für die Aufwärtsfahrt und einer zweiten Stellung B für die Abwärtsfahrt um einen Winkel α beweglich ist, wodurch ein ordnungsgemäßer Betrieb unabhängig vom Neigungswinkel β der Seilabspannung (1) gewährleistet wird.

3. Vorrichtung nach Anspruch 1, **dadurch gekennzeichnet, dass** am Punkt (9) der Verbindung des schwenkbaren Zugelements (5) mit der Laufrollenanordnung (4) ein Sperrklinkenmechanismus (16) vorgesehen ist, der die Bewegung des Zugelements (5) in seinen Endstellungen für die Aufwärts- und Abwärtsfahrt auf einen Winkel α = 2(90 - β) Grad begrenzt, wobei β den Neigungswinkel der Seilabspannung (1) bezeichnet.

4. Vorrichtung nach Anspruch 1, **dadurch gekennzeichnet, dass** das Fahrmodul (14) mit einem Energieversorgungs- und Aufzeichnungssystem (11) ausgestattet ist, an das die Signale der passiven Sensoren (7) des Diagnosemoduls (13), die um die zu prüfende Seilabspannung (1) auf den Gleitelementen (2) angeordnet sind, sowie die Signale des Encoders (15) in der oberen Laufrolle (4) übertragen werden.

5. Vorrichtung nach Anspruch 1, **dadurch gekennzeichnet, dass** im Energieversorgungs- und Aufzeichnungssystem (11) eine Filterung und Analyse der Signale mittels einer speziell hierfür vorgesehenen Software erfolgt, wodurch das Prüfergebnis unabhängig vom Durchmesser der zu prüfenden Seilabspannung (1), von möglichen Störeinflüssen sowie von der Geschwindigkeit der Drohne (6) ist.

6. Verfahren zur passiven Diagnose von Seilabspannungen (1) von Bauwerken mittels eines Diagnosemoduls (13), das eine Anordnung passiver Sensoren (7) umfasst, welche um die zu prüfende Seilabspannung (1) herum auf elastischen Gleitelementen (2) angeordnet sind, die elastisch an einem Ring (10) befestigt sind, wobei der Ring (10) mittels eines Scharniers (12) geöffnet werden kann, sowie eines Fahrmoduls (14) mit einer Anordnung von zwei Laufrollen (4), **dadurch gekennzeichnet, dass** die Laufrollenanordnung (4) des Fahrmoduls (14), die mittels eines Verbindungselements (3) starr mit dem Ring (10) des Diagnosemoduls verbunden ist, über ein Zugelement (5) von einer Drohne (6) angetrieben wird, wobei die sich entlang der Seilabspannung (1) bewegende Drohne (6) den Antrieb des Fahrmoduls (14) bildet, und dass ferner ein in der oberen Laufrolle (4) integrierter Encoder (15) zur Messung der zurückgelegten Strecke und der Fahrgeschwindigkeit des Fahrmoduls (14) verwendet wird.

7. Verfahren nach Anspruch 6, **dadurch gekennzeichnet, dass** die Beweglichkeit des Zugelements (5), das an den Punkten (8, 9) schwenkbar mit der Drohne (6) beziehungsweise mit der Laufrollenanordnung (4) verbunden ist, auf einen Winkel α zwischen einer ersten Stellung A für die Aufwärtsfahrt und einer zweiten Stellung B für die Abwärtsfahrt begrenzt ist, wodurch ein ordnungsgemäßer Betrieb unabhängig vom Neigungswinkel β der Seilabspannung (1) gewährleistet wird.

8. Verfahren nach Anspruch 6, **dadurch gekennzeichnet, dass** mittels eines am Punkt (9) der Verbindung des schwenkbaren Zugelements (5) mit der Laufrollenanordnung (4) angeordneten Sperrklinkenmechanismus (16) die Bewegung des Zugelements (5) in seinen Endstellungen für die Aufwärts- und Abwärtsfahrt auf einen Winkel α = 2(90 - β) Grad begrenzt wird, wobei β den Neigungswinkel der Seilabspannung (1) bezeichnet.

9. Verfahren nach Anspruch 6, **dadurch gekennzeichnet, dass** die Signale der passiven Sensoren (7) des Diagnosemoduls (13), die um die zu prüfende Seilabspannung (1) auf den Gleitelementen (2) angeordnet sind, sowie die Signale des Encoders (15) in der oberen Laufrolle (4) an das Energieversorgungs- und Aufzeichnungssystem (11) des Fahrmoduls (14) übertragen werden.

10. Verfahren nach Anspruch 6, **dadurch gekennzeichnet, dass** im Energieversorgungs- und Aufzeichnungssystem (11) eine Filterung und Analyse der Signale mittels einer speziell hierfür vorgesehenen Software erfolgt, wobei das Prüfergebnis unabhängig vom Durchmesser der zu prüfenden Seilabspannung (1), von möglichen Störeinflüssen sowie von der Geschwindigkeit der Drohne (6) ist.

## Revendications

1. Dispositif de diagnostic passif des haubans (1) de structures de bâtiment comprenant un module de diagnostic (13), qui comprend un ensemble de capteurs passifs (7) disposés autour du hauban (1) à examiner sur des éléments coulissants élastiques (2) fixés de manière élastique à un anneau (10), pouvant être ouvert grâce à une charnière (12), et comprenant un module de déplacement (14) muni d'un ensemble de deux galets (4), l'anneau (10) du module de diagnostic (13) étant relié rigidement, au moyen d'un élément de liaison (3), à l'ensemble de galets (4) du module de déplacement (14), **caractérisé en ce que** le module de déplacement est entraîné, par l'intermédiaire d'un organe de traction (5), par un drone (6) constituant le moyen d'entraînement du module de déplacement (14) et se déplaçant le long du hauban (1), le galet supérieur (4) étant équipé d'un codeur intégré (15) destiné à mesurer la distance parcourue et la vitesse de déplacement du module de déplacement (14).

2. Dispositif selon la revendication 1, **caractérisé en ce que** l'organe de traction (5) est relié de manière pivotante, aux points (8, 9), respectivement au drone (6) et à l'ensemble de galets (4), avec possibilité de déplacement selon un angle α entre une première position A correspondant à un déplacement ascendant et une seconde position B correspondant à un déplacement descendant, garantissant un fonctionnement correct indépendamment de l'angle d'inclinaison β du hauban (1).

3. Dispositif selon la revendication 1, **caractérisé en ce que** au point (9) de liaison entre l'organe de traction pivotant (5) et l'ensemble de galets (4) est disposé un mécanisme à cliquet (16) limitant le déplacement de l'organe de traction (5), dans ses positions extrêmes correspondant aux déplacements ascendant et descendant, à un angle α = 2(90 - β) degrés, β étant l'angle d'inclinaison du hauban (1).

4. Dispositif selon la revendication 1, **caractérisé en ce que** le module de déplacement (14) est équipé d'un système d'alimentation et d'enregistrement (11), auquel sont transmises les indications des capteurs passifs (7) du module de diagnostic (13), répartis autour du hauban (1) à examiner sur les éléments coulissants (2), ainsi que celles du codeur (15) intégré au galet supérieur (4).

5. Dispositif selon la revendication 1, **caractérisé en ce que**, dans le système d'alimentation et d'enregistrement (11), le filtrage et l'analyse des signaux sont réalisés au moyen d'un logiciel dédié, de manière à rendre le résultat de l'essai indépendant du diamètre du hauban (1) à examiner, des perturbations éventuelles qui l'affectent ainsi que de la vitesse du drone (6).

6. Procédé de diagnostic passif de haubans (1) de structures de bâtiment au moyen d'un module de diagnostic (13) comprenant un ensemble de capteurs passifs (7) disposés autour du hauban (1) à examiner sur des éléments coulissants élastiques (2) fixés de manière élastique à un anneau (10), cet anneau (10) pouvant être ouvert grâce à une charnière (12), et comprenant un module de déplacement (14) muni d'un ensemble de deux galets (4), **caractérisé en ce que** l'ensemble de galets (4) du module de déplacement (14), relié rigidement à l'anneau (10) du module de diagnostic au moyen d'un élément de liaison (3), est entraîné par un drone (6) via un organe de traction (5), le drone (6), se déplaçant le long du hauban (1), constituant le moyen d'entraînement du module de déplacement (14), et **en ce qu'**un codeur (15) intégré au galet supérieur (4) est utilisé pour mesurer la distance parcourue et la vitesse de déplacement du module de déplacement (14).

7. Procédé selon la revendication 6, **caractérisé en ce que** la possibilité de déplacement de l'organe de traction (5), relié de manière pivotante aux points (8, 9), respectivement au drone (6) et à l'ensemble de galets (4), est limitée à un angle α entre une première position A correspondant au déplacement ascendant et une seconde position B correspondant au déplacement descendant, garantissant ainsi un fonctionnement correct indépendamment de l'angle d'inclinaison β du hauban (1).

8. Procédé selon la revendication 6, **caractérisé en ce que**, au moyen d'un mécanisme à cliquet (16) disposé au point (9) de liaison entre l'organe de traction pivotant (5) et l'ensemble de galets (4), le déplacement de l'organe de traction (5), dans ses positions extrêmes correspondant aux déplacements ascendant et descendant, est limité à un angle α = 2(90 - β) degrés, β étant l'angle d'inclinaison du hauban (1).

9. Procédé selon la revendication 6, **caractérisé en ce que** les indications provenant des capteurs passifs (7) du module de diagnostic (13), disposés autour du hauban (1) à examiner sur les éléments coulissants (2), ainsi que celles du codeur (15) intégré au galet supérieur (4), sont transmises au système d'alimentation et d'enregistrement (11) du module de déplacement (14).

10. Procédé selon la revendication 6, **caractérisé en ce que**, dans le système d'alimentation et d'enregistrement (11), le filtrage et l'analyse des signaux sont réalisés au moyen d'un logiciel dédié, de manière à rendre le résultat de l'essai indépendant du diamètre du hauban (1) à examiner, des perturbations éventuelles qui l'affectent ainsi que de la vitesse du drone (6).
